# EUROPEAN PATENT SPECIFICATION

(11) **EP 1 847 969 B1**
(45) Date of publication and mention of the grant of the patent: **30.11.2011**
(21) Application number: 06112784.1
(22) Date of filing: 19.04.2006
(51) Int. Cl.: G07B 15/00, G07C 9/00

(54) **Systems and methods for controlling vehicle access**
Systeme und Verfahren zur Steuerung des Zugangs zu einem Fahrzeug
Systèmes et méthodes de contrôle d'accès au véhicule

(43) Date of publication of application: 24.10.2007
(73) Proprietor: Mobility Genossenschaft, 6000 Luzern (CH)
(72) Inventor: Heusi, Karl, 8932, Mettmenstetten (CH); Fischer, Rolf, 6048, Horw (CH); Egli, Stephan, 8854, Galgenen (CH)
(74) Representative: Dr. Graf & Partner AG

(56) References cited:
- EP-A- 1 176 571
- US-A1- 2004 073 440
- US-A1- 2006 072 756

## Description

### 1. Field of the Invention

The invention relates to a system that allows one of a plurality of users to automatically make a reservation for a vehicle, then the system controls the access and use of the vehicle.

### 2. Background of the Invention

Systems for the shared-use of vehicles have been described in the prior art, however, current systems are inconvenient because only a limited group of persons has access to the vehicles, such as cars. Using a shared vehicle must be as convenient as possible to gain a large market penetration, or users will choose to use private vehicles instead. The shared vehicles should be accessible for a large group of persons. For example the vehicles should also be easily accessible for persons not belonging to a closed user group. The vehicles should in particular also be accessible for persons using a shared vehicle for the first time. Third party organisations like trusted partner organisations or travel agencies should also be able to allocate shared-use vehicles all over the world without the need of annoying inscription procedures to gain access to a shared-used vehicle. Transaction time and the number of steps that are required to gain entry to the vehicle should also be minimized. There is a need for a reservation system which can enable efficient use of vehicles and helps ensure availability. The reservation system should enable also various third party providers to easily select an available vehicle and time for a user, or to allow choosing from alternatives that are similar to the desired vehicle and time. Access to vehicles should be secure from unauthorized users. During the period the car is reserved, access to the car should be restricted to the reserving user only. This provides an expected level of security for the reserving user and prevents a vehicle from being used by a person with no reservation either maliciously or inadvertently.

Several systems have been described for shared access or shared-use vehicles. Generally these systems describe various methods of access and monitoring vehicles and are not integrated with a plurality of reservation systems. As such, they provide ways of sharing vehicles within one user group, and are therefore not very scalable.

The patent application No. WO 01/61604 discloses a system which can be used within a single reservation system only.

The patent application No. WO 02/089077 discloses a system which is not suitable for a system of shared-use vehicles, when fast vehicle access is important.

The patent application No. US 2004/073440 A1 discloses a shared-used vehicle system which is not very convenient for use, in particular for the first time users of the system.

It is therefore an object of the present invention to provide a system that allows a number of shared-use vehicles to be easily used by a huge potential number of users.

It is also an object to provide a system which is able to improve the average utilisation of shared-use vehicles, by offering the shared-use vehicles to a larger user group or to third parties such as a trusted partner organisation. It is also an object to provide a system which is able to use shared-use vehicles of a partner organisation for own clients.

It is a further object of the invention to provide a shared-use vehicle system that is convenient for use.

It is an additional object to provide a system that makes construction, management, and growth of a shared-use vehicle system more economical.

### 3. Summary of the Invention

These and other objects are attained by the invention, which comprises a system and method for sharing the use of one or more vehicles by a plurality of users.

The problem is solved by a system comprising the features of claim 1. Claims 2 to 6 claim further advantageous embodiments. The problem is further solved by a method comprising the features of claim 7. Claims 8 to 13 claim further advantageous method steps.

The problem is in particular solved by a system for controlling access to a vehicle, comprising:
- a vehicle-associated access control module for enabling access to the vehicle by a first or second authorized user following completion of a verification sequence, the vehicle-associated access control module comprising a reader for reading a provided unique information code (PUIC);
- a server including a verification module for making a reservation for the vehicle upon receiving a request to reserve the vehicle and including storage means for storing a unique information code (UIC) and a personal identification code (PIC) of the first and second authorized user;
- a communications channel for supporting communications between the vehicle-associated access control module and the server,
- whereby the vehicle-associated access control module comprises storage means for storing information representative of the reservation, and comprises a decision module which is adapted to enable access to the vehicle,
- the decision module is adapted to read by reader a provided unique identification code (PUIC):
- the decision module is adapted to check whether a unique identification code (UIC) of the first authorized user is stored, and is either adapted to permit vehicle access to the first authorized user if the provided unique identification code (PUIC) corresponds to the unique identification code (UIC) of the first authorized user,
- or is adapted to read by input means a provided personal identification code (PPIC) and to permit vehicle access if the provided personal identification code (PPIC) corresponds to the personal identification code (PIC) of the first authorized user, whereby the decision module is adapted to transmit the provided unique identification code (PUIC) by the communication channel to the server,
where the provided unique identification code (PUIC) is stored in the storage means as the unique identification code (UIC) of the first authorized user.

The problem is in particular also solved by a method of controlling access to a vehicle by a first or second authorized user, comprising the steps of :
- making, at a reservation system, a reservation for the vehicle, upon receiving a request by the first authorized user to reserve the vehicle, wherein the reservation system stores information of authorized users;
- checking whether information of authorized users comprise a unique identification code (UIC) of the first authorized user (U1) and
- when the first authorized user attempts to access to the vehicle by providing a unique identification code (PUIC),
- either permitting access if the provided unique identification code (PUIC) corresponds to the unique identification code (UIC) of the first authorized user,
- or if information of authorised users does not comprise a unique identification code (UIC) of the first autorized user (U1) transmitting a personal identification code (PIC) to the first authorized user (U1), and collecting the data of the provided unique identification code (PUIC) and updating the stored information of the first authorized user in the reservation system by storing the collected data as the unique identification code (UIC), and permitting access if the first authorized user provides a personal identification code (PPIC) corresponding to the transmitted personal identification code (PIC).

According to the present invention, a system for controlling access to a vehicle is provided. The system includes a vehicle associated access control module that is located in the vehicle. This module allows access to the vehicle by users who have been authorized by a verification module. The system also includes a central server and the verification module being part of the central server. The central server communicates with the vehicle-associated access control module over a communications such as a wireless communications system.

The central server includes storage means that stores personal identification information for all authorized users, and vehicle information. The server has a database that stores all reservation requests, including specific vehicles, dates and times, and authorizations.

To be able to get access to a vehicle, three requirements have to be fulfilled:
First: The user has to become an authorized user before he can make a reservation for a vehicle.
Second: The authorized user has to make a reservation for a specific vehicle at a certain location, date and time.
Third: The authorized user needs an identification when, at the appointed time, the authorized user accesses the vehicle and presents identification such as a smart card comprising a unique identification code (UIC) or a personal identification code (PIC) to gain access to the vehicle.

To become an authorized user, legal criteria such as owing a drivers license as well as credit criteria have to be fulfilled. These criteria are preferably checked only once. If the check succeeds, the user becomes the status of an authorized user.

Preferably, each authorized user is provided with a personal code (PC) as well, and of each authorized user his unique information code (UIC) is known. Preferably this unique information code (UIC) is unique worldwide. Such a unique information code (UIC) has the advantage that its use is safe, and the user can always be identified.

There are several unique information codes (UIC) known. For example Fingerprint or Iris-/Retina-Scan prove to be a unique information code (UIC). Another approach is using a widely distributed personal electronic means already in the possession of the users for other applications to provide a unique information code. Said electronic means can for example be a general-purpose smart card or a credit card equipped with a chip card for instance. Such cards are herein called smart cards. Each smart card has a world wide unique information code (UIC), called ID-code, which definition and readability is defined by ISO standards No. 14443 and 15693. One advantage of using the ID-code is that this code is always accessible for a reader, in contrast to other data stored on the smart card, which may be access protected or stored in an unknown or unreadable format. Therefore a database can be established comprising an individual personal code (PC), assigned to each user, as well as the unique information code (UIC) of the corresponding user. One disadvantage of the unique information codes (UIC) mentioned in this chapter is that it is often unknown to the user and can therefore not be provided by the user himself. It is therefore necessary to establish a link between a specific user, represented by the individual personal code (PC) and his unique ID-code. This link is preferably established by reading the ID-code when knowing that the specific user is presenting his smart card, and to store the corresponding unique identification code (UIC), which in this example is the respective ID-code. This information is usually stored in a database. To make sure that the specific user and no other person is presenting his smart card, which is read, for example a personal identification code (PPIC) may be used, which the specific user has to provide before or after reading the smart card. Only if this provided personal identification code (PPIC) corresponds to the personal identification code (PIC) expected from the specific user, the unique identification code (UIC) is assigned to the personal code (PC) and stored.

Once the link between a user, represented by the personal code (PC) and his unique identification code (UIC) is stored, the access to shared-use vehicles by using this unique identification code (UIC) is safe and easy. The system and method according to the invention allows to access shared-use vehicles by using a unique identification code (UIC), and, if this code is not known, to collect this unique identification code (UIC) by a very convenient system and method.

This specification, including the drawings attached hereto, will next present the invention at various levels of enabling detail, from conceptual to specific examples of implementation.

### Brief Description of the Drawings

Fig. 1 illustrates one embodiment of a vehicle access control system;
Fig. 2 shows an overview of the system;
Fig: 3 shows a stored user profile;
Fig. 4 shows the steps for making a reservation;
Fig. 5 shows Mode A to get vehicle access;
Fig. 6 shows Mode B to get vehicle access.

### Detailed Description of the Invention

From the point of view of an authorized user who wants to use a vehicle such as a car and make a reservation at a provider of shared-use vehicles, the procedure to make a reservation and use the vehicle, after becoming an authorized user, may comprise the following steps:
- Step I: Making a reservation. This step comprises completion of a verification sequence, so the system can identify the user requesting a reservation. Usually the user owns a personal code (PC) or an account number, based on which the system is able to establish the user's personal code (PC). This step also comprises making a reservation for a specific vehicle, for example of one of a pool of vehicles parked in a specific location. This step also comprises making the reservation for a specific date, time and duration.
- Step II: The driver goes to the specific location and gains access to the vehicle, uses the vehicle and afterwards returns the vehicle to a specific location. The access to the vehicle should be as convenient as possible, preferably by using a unique information code (UIC), for example provided by a chip chard, or by using a personal identification code (PIC).
- Step III: The driver gets billed for the services used.

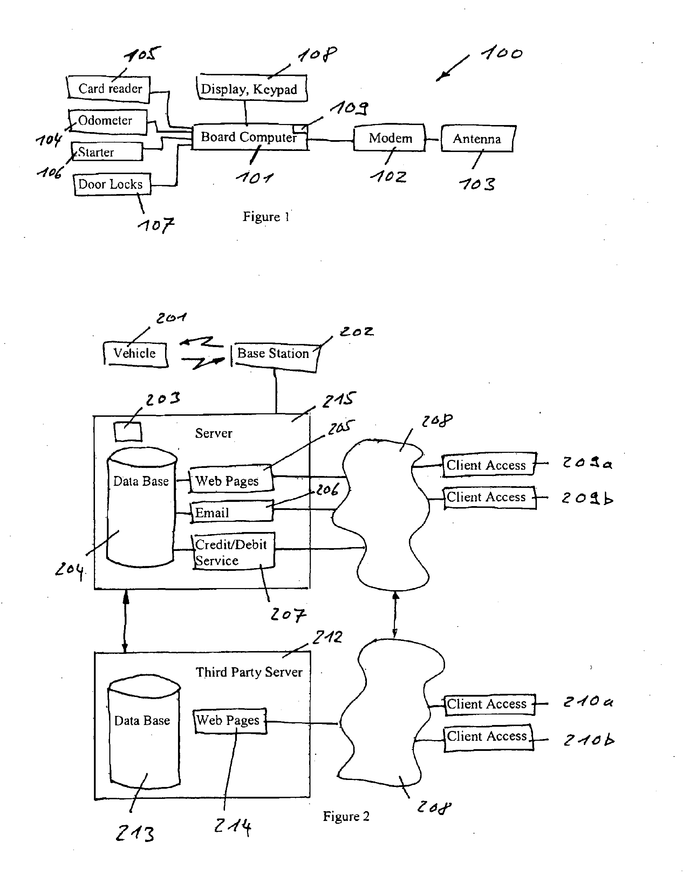

Figure 1 illustrates an example of a vehicle-associated access control system 100. The system comprises a board computer 101, a card reader 105, door locks 107, a starter 106, an odometer 104, a display and keypad 108, a GSM-GPRS wireless modem 102 and an antenna 103. A communication link enables via GSM-GPRS wireless modem 102 and antenna 103 to exchange data between the board computer 101 and a remote server 215. If a communication link is enabled, reservation data may be transmitted from the remote server 215 to the board computer 101 or data like for example the total distance travelled, which is measured by the odometer 104, may be transmitted in vice versa direction.

Figure 2 illustrates one embodiment of the overall system of a shared-car provider. The vehicle-associated access control system 100 disclosed in figure 1 is contained in each of a plurality of cars 201 that communicate via wireless link through a base station 202 with a server 215. The client personal computers 209a and 209b are used to access the server 215 via communication network like the Internet 208 so that vehicle availability can be reviewed and reservations created. Connection to the server 215 can also be provided with other types of connection like SMS, Bluetooth. The server 215 contains a database 204 that stores all the information necessary to manage the resource management reservation system. Web pages 205 are constructed by the server 215 using information from the database 204 and can be displayed on the client personal computers 209a and 209b via the Internet 208. The server 215 can also send and receive email via the Email In/Out module 206 and via the Internet 208. The server 215 has also access to a Credit/Debit service module 207, to automatically charge for usage of the cars.

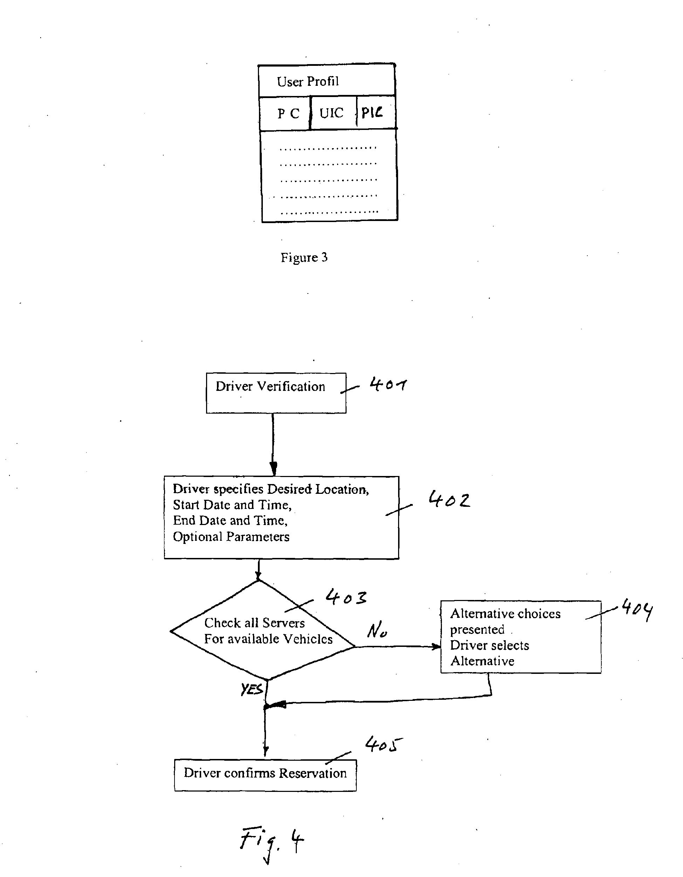

The server 215 comprises storage means 204 to store a profile of each user. As disclosed in figure 3, each user profile comprises at least a personal code (PC) and a unique identification code (UIC), whereby the unique identification code (UIC) might not be know after creating the user profile, but collected later. The user profile may comprise further data, such as individual preferences of the user, like type of car and so on. The user profile may also comprise a personal identification code (PIC).

Figure 2 also illustrates a server 212 of a different service provider, a third party provider, herein called "partner-company". The partner server 212 contains a database 213 that stores all information necessary to manage the independent partner resource management reservation system. Web pages 214 are constructed by the partner server 212 using information from the database 213 and can be displayed on client personal computers 210a and 210b via the Internet 208. The clients personal computers 210a and 210b are also used to access the partner server 212 via the internet 208 so that vehicle availability can be reviewed and reservations created. To increase the usage of the cars 201, the company running server 215 and providing car sharing services, herein called "car-company", may pooling the cars with partner-companies, in that data of available cars are accessible for or transferred to the partner server 212. These data may include information such as type of car, price, date, time and location. Clients accessing the partner server 212 are therefore able to make reservations of cars 201 administered by the car-company.

Before enabling a new user to become an authorized user and to actually be in a position of making a reservation, the system of the car-company or of the partner-company verifies that the information submitted by a particular user is correct and acceptable. Depending on the level of security and credit verification desired, said verification could be more or less through. In a preferred embodiment, fully automated database queries are made from the server 215 or the server 212 to a remote entity responsible for regulating the use of the appropriate category of vehicles, e.g. drivers' license. Upon confirmation that all information given is correctly correlated in the queried databases and/or is acceptable in relation to the service providers' system critera, the new user becomes an authorized user, and for this authorized user a personal code (PC) or account number is generated at the server of the respective car-company or partner-company. The car-company and the partner-company usually provide different personal codes (PC, PC1), may be also in different formats and based on different rules.

Figure 4 describes the method to make a reservation according to Step I in more detail. The driver's identity is verified, as shown in step 401, by any of various means including entering a username and password. Once the driver's identity and account is accepted and his personal code (PC) has been identified, the driver then specifies the desired location to use the car, as well as start date and time, end date and time, and other optional parameters, shown in step 402. As shown in step 403, the server 215 or 212 checks for any available vehicle or vehicles that match the preferences specified. If necessary, various different servers 215, 212 also of different providers may be checked. If no vehicles are available that match the preferences, alternative choices are presented to the driver, as shown in step 404.

After the vehicle availability is confirmed, or an alternative vehicle is chosen, shown in step 404, the driver confirms the reservation, shown in step 405. The confirmation step allows the driver to select from among several available vehicles that match the preferences.

After the reservation is confirmed a reservation dataset is created and stored, the reservation dataset comprising at least data regarding desired location, start date and time, and including at least one of the personal code (PC) and unique information code (UIC). In this example it is assumed the unique information code (UIC) being the Chip-ID of a smart card.
When the reservation was made on server 215 of the car-company it may happen that the unique information code (UIC) of the user is not known, and therefore the reservation dataset created by the car-company does not comprise this unique information code (UIC). Therefore a personal identification code (PIC) is provided to the user and is stored with the corresponding personal code (PC).

The car-company allowes an authorized user access to a vehicle in two different modes:
Mode A: Access knowing the unique information code (UIC) of the user
Mode B: Access without knowing the unique information code (UIC) of the user but using a personal identification code (PIC), and collecting the unique information code (UIC) of the respective user.

After the reservation is confirmed, received and stored in the server 215 of the car-company, it is checked whether server 215 establishes communication with the vehicle-associated access control module the appropriate car 201. Once this communication is established, the server 215 transfers the reservation information to the vehicle-associated access control module. The information usually comprises specific renting data like desired location, start date and time, end date and time, optional parameters and also includes the unique information code (UIC) or chip ID of the user, or, if not available, a personal identification code (PIC).

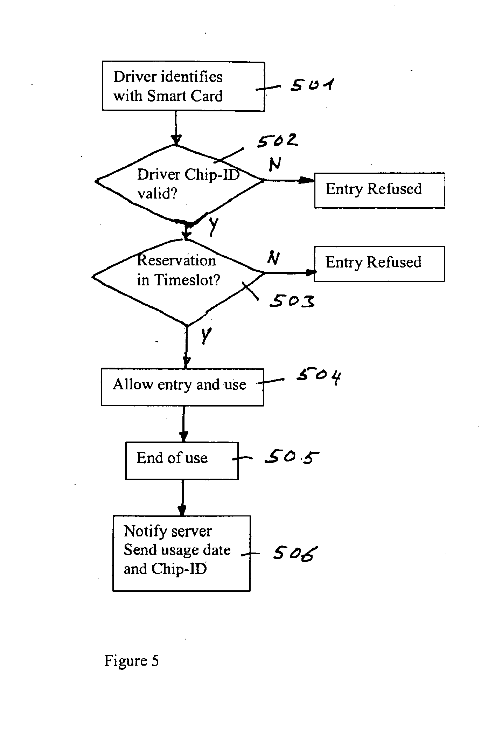

Figure 5 describes access Mode A in more detail. In Figure 5, the driver goes to the specific location and gains access to the vehicle.

The operations shown in Figure 5 are implemented by the vehicle associated access control module 100. As shown in step 501 of Fig. 5, the driver first identifies himself to the system with a smart card having a chip-ID. In the preferred embodiment, the access control module is equipped with a proximity card detector that enables access to the vehicle only when a validated proximity card is placed in proximity to the card detector. If the chip-ID in step 502 is valid, which means the chip-ID, respectively the provided unique information code (PUIC) corresponds to the unique information code (UIC) stored in the access control module 100, then in step 503 is checked whether the actual time is within the timeslot the reservation has been made. If this criterion is fulfilled, entry and use is allowed in step 504. If appropriate, further security procedures such as entering an additional code could be applied, before opening the door or before starting the engine. After the end of using the vehicle 505, a dataset is sent to the server 215 in step 506, this dataset including the chip-ID, and for example milage.

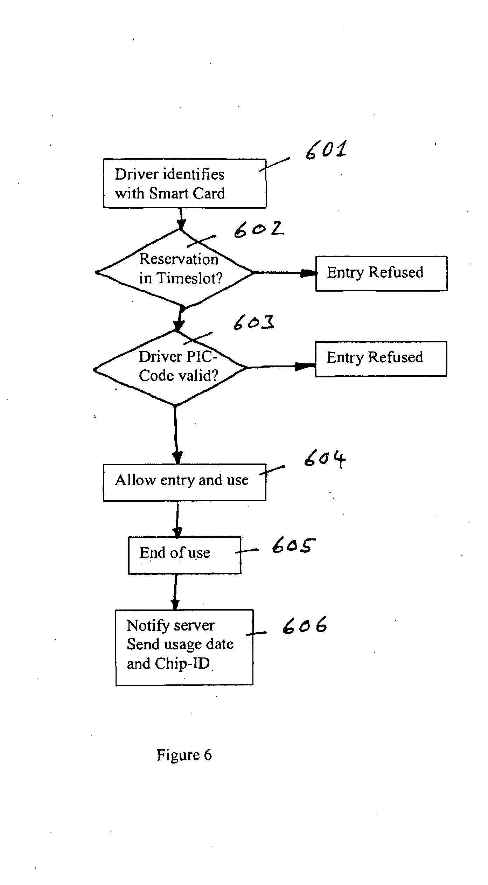

Figure 6 describes access Mode B in more detail. In Figure 6, the driver goes to the specific location and tries to gain access to the vehicle. The operations shown in Figure 6 are implemented by the vehicle associated access control module 100. As shown in step 601 of Fig. 6, the driver first identifies himself to the system with a smart card having a chip-ID, which means the card reader tries to read a provided unique information code (PUIC). If a chip-ID can be recognised and the provided unique information code (PUIC) can be read, then in step 602 is checked whether the actual time is within a reservation timeslot, within which an authorized user was expected. If this criterion is fulfilled the authorized user has to provide a personal identification code PPIC in step 603. If the provided PPIC corresponds to the personal identification code PIC expected with the specific authorized user, access to the vehicle is permitted in step 604 and the provided unique identification code PUIC is stored in storage means 109 of the control module 100. After the end of using the vehicle in step 605, a dataset is sent to the server 215 in step 606, this dataset including the provided unique identification code PUIC, which is the chip-ID, as well as for example milage and further data. Later on the user profile of the specific authorized user in the reservation system 215 is updated by storing the provided unique identification code PUIC as the unique identification code UIC. There are various ways in step 603 to key in the provided personal identification code PPIC. For example the vehicle-associated access control module 100 comprises input means like a keypad 108, which is accessible from outside the vehicle. As an alternative, for example a mobile phone could be used to key in and send the provided personal identification code PPIC to the server 215, which transmits this code PPIC to the control module 100. As an alternative, access to the vehicle is allowed after succeeding step 602, and the control module 100 comprises a keypad accessible within the vehicle, through which the code PPIC can be keyed in.

The system and method according to the invention doesn't allow only users of the car-company to make reservations for vehicles, but allows also the user of partner-companies to make reservation of vehicles managed by the car-company.

As soon as the user of a partner-company has become an authorized user of the partner-company and has received a personal code (PC1) or an account number at the partner-company, the user may make a reservation in the server 212 of the partner-company for cars managed by the car-company, specifying desired location, start date and time, end date and time and optional parameters. This data, including the personal code (PC1) of the partner-company are then transferred to the server 215 of the car-company. The car-company checks whether for the personal code PC 1 already a user profile exists, as disclosed in Figure 3. If a user profile exists, including a personal code (PC), the data received from server 212 are stores in this user profile, including personal code PC1. If the user profile does not exist, a new user profile, including a personal code PC is created, and the data received from server 212, including personal code PC1, is stored in this user profile.

When making a reservation for a car 201 the partner-company is considered to be a trusted partner in that the partner-company is responsible for checking that all user's information are correct, and in particular that the user fulfils all legal requirements for driving a car.

If available, the partner-company also provides the unique identification code UIC. In this case, the unique identification code UIC may also be the personal code PC1. Usually the partner-company doesn't know the unique identification code UIC, and therefore is not able to provide this code. In this situation, the car-company provides a personal identification code (PIC) to the user, for example by E-mail or SMS, and uses Mode B, as described, to get access to the vehicle. By using Mode B, the unique information code (UIC) of the user is colleted and stored in the user profile stored in the database of the car-company.

If, in the future, the same authorized user makes a reservation through the partner-company, the partner-company will provide, as usual, reservation data comprising the personal code PC 1 of the respective user, which are transmitted to the server 215 of the car-company. Because the car-company has stored the user profile, including the personal code PC 1, PC and the respective unique identification code UIC, the vehicle-associated access control module 100 is provided with the unique identification code UIC, and the uses accesses the vehicle is Mode A. Therefore, even if the partner-company doesn't know the unique identification code UIC of the respective user, the car-company is able to find out the unique identification code UIC by a mode B access, and the car-company may afterwards for this specific user always use Mode A to access their vehicles. Further access to the vehicle may be gained, even though the car-company has only little information about the user, such as the personal code PC 1, and later the unique identification code UIC. This is possible, because users from the partner-company are considered to be trusted users and do not have to be checked in detail.

If the reservation was made by a partner-company, the server 215 transfers at least the respective personal code PC 1 as well as billing information to server 212 of the partner-company, to provide them with all necessary information to charge their client. The car-company doesn't need detailed information about the user of the partner-company, except the personal code PC1, because the partner-company has all detailed information to charge the user.

This method allows for a user of a partner-company to very easily gain access to vehicles administered by the car-company. This method also allows for a user of a car-company to very easily gain access to vehicles administered by another car-company or another vehicle provider. The system and method according to the invention therefore allows a user to get access to a large amount of vehicles, which can be placed, depending on the participating car-companies, on many places on the world.

By using and knowing the unique identification code UIC, it is also possible to allow spontaneous access to a vehicle for users of the car-company as well as for users of partner-companies. Assuming a vehicle has no fixed reservation and a user is presenting his unique identification code UIC. Such a user could gain access to the vehicle by mode A, without the need of making a reservation, as explained with step I. After returning the vehicle, all information regarding charging is sent to server 212, and the user will be charged either by the car-company or by the respective partner-company. The concept of using a unique identification code and of getting the information about the unique identification code in possession of a lot of users, allows making the use of shared vehicles very easy, very convenient, and very reliable and safe.

## Claims

1. A system for controlling access to a vehicle (201), comprising:
- a vehicle-associated access control module (100) for enabling access to the vehicle (201) by a first or second authorized user following completion of a verification sequence, the vehicle-associated access control module (100) comprising a reader (105) for reading a provided unique information code (PUIC);
- a server (215, 212) including a verification module (203) for making a reservation for the vehicle (201) upon receiving a request to reserve the vehicle (201) and including storage means (204, 213) for storing a unique information code (UIC) and a personal identification code (PIC) of the first and second authorized user;
- a communications channel (202) for supporting
communications between the vehicle-associated access control module (100) and the server (215, 212),
- whereby the vehicle-associated access control module (100) comprises storage means (109) for storing information representative of the reservation, and comprises a decision module (101) which is adapted to enable access to the vehicle (201),
- the decision module (101) is adapted to read by reader (105) a provided unique identification code (PUIC):
- the decision module (101) is adapted to check whether a unique identification code (UIC) of the first authorized user is stored, and the decision module is **characterised in that**:
- it either is adapted to permit vehicle access to the first authorized user if the provided unique identification code (PUIC) corresponds to the unique identification code (UIC) of the first authorized user,
- or it is adapted to read by input means (105, 108) a provided personal identification code (PPIC) and to permit vehicle access if the provided personal identification code (PPIC) corresponds to the personal identification code (PIC) of the first authorized user, whereby the decision module (101) is adapted to transmit the provided unique identification code (PUIC) by the communication channel (202) to the server (215),
where the provided unique identification code (PUIC) is stored in the storage means (204) as the unique identification code (UIC) of the first authorized user.

2. The system of claim 1, wherein the reader (105) is a chip card detector.

3. The system of claim 2, wherein the reader (105) is able to detect the Chip ID.

4. The system of any one of the proceeding claims, wherein the decision module (101) comprises a timer and enables access to the vehicle (201) for an authorized user only within a predetermined timeframe.

5. The system of any one of the proceeding claims, wherein the verification module (203) is adapted to monitor whether for an authorized user a respective unique information code (UIC) is stored, and is adapted to make sure that, if available, the unique information code (UIC) will be transmitted to the vehicle-associated access control module (100).

6. The system of any one of the proceeding claims, wherein the verification module (203) is programmed to select, based on a personal code (PC, PC1), the corresponding unique information code (UIC), and is programmed that in the communication with third parties the personal code (PC, PC1) is used.

7. A method of controlling access to a vehicle (201) by a first or second authorized user comprising the steps of:
- making, at a reservation system (212,215), a reservation for the vehicle (201), upon receiving a request by the first authorized user to reserve the vehicle (201), wherein the reservation system (212,215) stores information of authorized users;
- checking whether information of authorized users comprise a unique identification code (UIC) of the first authorized user (U1), the method is **characterised in that** it further comprises the steps of :
- when the first authorized user (U1) attempts to access to the vehicle (201) by providing a unique identification code (PUIC),
- either permitting access if the provided unique identification code (PUIC) corresponds to the unique identification code (UIC) of the first authorized user (U1),
- or if information of authorized users does not comprise a unique identification code (UIC) of the first authorized user (U1) transmitting a personal identification code (PIC) to the first authorized user (U1), and
- collecting the data of the provided unique identification code (PUIC) and updating the stored information of the first authorized user (U1) in the reservation system (212,215) by storing the collected data as the unique identification code (UIC), and permitting access if the first authorized user (U1) provides a personal identification code (PPIC) corresponding to the transmitted personal identification code (PIC).

8. The method of claim 7 wherein, if the first authorized user (U1) provides a personal identification code (PPIC) corresponding to the transmitted personal identification code (PIC), access is only permitted, if the first authorized user (U1) provides the personal identification code (PPIC) within a predetermined timeframe.

9. The method of any one of claims 7 and 8, wherein providing a unique identification code (PUIC) means reading the Chip-ID of a chip card.

10. The method of any one of claim 7 to 9, wherein, if the request by the first authorized user (U1) to reserve the vehicle (201) does not comprise a unique identification code (UIC), checking stored data, and if available, assign the stored unique identification code (UIC) of the first authorized user (U1) to be the unique identification code (UIC) of the first authorized user (U1).

11. The method of any one of claims 7 to 10, wherein the step of making a reservation for the vehicle (201) and storing information of an authorized user comprises at least data about desired location, start date, start time and personal code (PC).

12. The method of claim 11, wherein third parties may make a reservation for the vehicle (201) by providing at least data about desired location, start date, start time and personal code (PC1).

13. The method of claim 12 comprising the further step of sending billing information to the third party using the personal code (PC1) as reference.

## Patentansprüche

1. Ein System zur Zugangskontrolle zu einem Fahrzeug (201), umfassend:
- ein einem Fahrzeug zugehöriges Zugangskontrollmodul (100) um einem ersten oder zweiten autorisieren Nutzer nach dem Abschluss einer Verifikationssequenz den Zugang zum Fahrzeug (201) zu ermöglichen, wobei das dem Fahrzeug zugehörige Zugangskontrollmodul (100) einen Leser (105) umfasst zum Lesen eines bereitgestellten unverwechselbaren Informationscodes (PUIC);
- einen Server (215, 212) umfassend ein Verifikationsmodul (203) zum Durchführen einer Reservation für das Fahrzeug (201) nach dem Erhalt einer Anfrage das Fahrzeug (201) zu reservieren, und umfassend Speichermittel (204, 213) zum Speichern eines unverwechselbaren Informationscodes (UIC) und eines persönlichen Identifikationscodes (PIC) des erste und zweiten autorisierten Nutzers;
- einen Kommunikationskanal (202) zum Ermöglichen der Kommunikation zwischen dem dem Fahrzeug zugehörigen Zugangskontrollmodul (100) und dem Server (215, 212),
- wobei das Fahrzeug zugehörige Zugangskontrollmodul (100) Speichermittel (109) umfasst zum Speichern von bezüglich der Reservation aussagekräftigen Information, und ein Entscheidungsmodul (101) umfasst, das ausgestaltet ist zum Ermöglichen des Zugangs zum Fahrzeug (201),
- wobei das Entscheidungsmodul (101) ausgestaltet ist zum Lesen eines bereitgestellten unverwechselbaren Informationscodes (PUIC) durch den Leser (105):
- wobei das Entscheidungsmodul (101) ausgestaltet ist zum Prüfen ob ein unverwechselbarer Informationscode (UIC) des ersten autorisierten Nutzers gespeichert ist, und wobei das Entscheidungsmodul **gekennzeichnet** ist, dass
- es entweder ausgestaltet ist dem ersten autorisierten Nutzer Zugang zum Fahrzeug zu erlauben wenn der bereitgestellte unverwechselbare Informationscode (PUIC) dem unverwechselbarer Informationscode (UIC) des ersten autorisierten Nutzers enspricht,
- oder es ausgestaltet ist über die Eingabemittel (105, 108) einen zur Verfügung gestellten persönlichen Identifikationscode (PPIC) zu lesen und den Zugang zum Fahrzeug zu erlauben, falls der zur Verfügung gestellte persönliche Identifikationskode (PPIC) dem persönlichen Identifikationscode (PIC) des ersten autorisierten Nutzers entspricht, wobei das Entscheidungsmodul (101) ausgestaltet ist zum Übertragen des bereitgestellten unverwechselbaren Informationscodes (PUIC) über den Kommunikationskanal (202) an den Server (215),
wobei der bereitgestellte unverwechselbare Informationscode (PUIC) in den Speichermitteln (204) als der unverwechselbaren Informationscode (UIC) des ersten autorisierten Nutzers gespeichert ist.

2. System gemäss Anspruch 1, wobei der Leser (105) ein Chipkartendetektor ist.

3. System gemäss Anspruch 2, wobei der Leser (105) fähig ist die Chip ID zu erkennen.

4. System gemäss einem der vorhergehenden Ansprüche, wobei das Entscheidungsmodul (101) eine Zeituhr umfasst, welche einem autorisierten Nutzer den Zugang zum Fahrzeug (201) nur innerhalb eines vorherbestimmten Zeitraums ermöglicht.

5. System gemäss einem der vorhergehenden Ansprüche, wobei das Verifikationsmodul (203) ausgestaltet ist zum Überwachen ob für einen autorisierten Nutzer ein entsprechender unverwechselbarer Informationscode (UIC) gespeichert ist, und ausgestaltet ist zum Sicherstellen, dass der unverwechselbarer Informationscode (UIC), falls verfügbar, zu dem Fahrzeug zugehörigen Zugangskontrollmodul (100) übermittelt wird.

6. System gemäss einem der vorhergehenden Ansprüche, wobei das Verifikationsmodul (203) programmiert ist basierend auf einem persönlichen Code (PC, PC1) den entsprechenden unverwechselbaren Informationscode (UIC) zu wählen, und programmiert ist, dass bei der Kommunikation mit Dritten der persönliche Code (PC, PC1) verwendet wird.

7. Ein Verfahren zur Zugangskontrolle eines ersten oder zweiten autorisierten Nutzers zu einem Fahrzeug (201), umfassend die Schritte:
- durchführen einer Reservation für das Fahrzeug (201) bei einem Reservationssystem (212,215) nach dem Erhalt einer Anfrage des ersten autorisierten Nutzers das Fahrzeug (201) zu reservieren, wobei das Reservationssystem (212,215) Information des autorisierten Nutzers speichert;
- überprüfen ob die Information von autorisierten Nutzern einen unverwechselbaren Informationscode (UIC) des ersten autorisierten Nutzers (U1) enthält, wobei das Verfahren **gekennzeichnet** ist, dass es die folgenden weiteren Schritte umfasst:
- sobald der erste autorisierte Nutzer (U1) Zugang zum Fahrzeug (201) verlangt durch das Bereitstellen der unverwechselbaren Informationscodes (PUIC),
- entweder den Zugang erlauben falls der bereitgestellte unverwechselbare Informationscode (PUIC) dem unverwechselbaren Informationscode (UIC) des ersten autorisierten Nutzers (U1) entspricht,
- oder falls die Information autorisierter Nutzer keinen unverwechselbaren Informationscode (UIC) des ersten autorisierten Nutzers (U1) umfasst, übertragen eines persönlichen Identifikationscodes (PIC) an den ersten autorisierten Nutzer (U1), und
- sammeln der Daten des bereitgestellten unverwechselbaren Informationscodes (PUIC) und aufdatieren der gespeicherten Information des ersten autorisierten Nutzers (U1) im Reservationssystem (212,215) durch Speichern der gesammelten Daten als den unverwechselbaren Informationscode (UIC), und erlauben des Zugangs falls der erste autorisierte Nutzer (U1) einen zur Verfügung gestellten persönlichen Identifikationscode (PPIC) eingibt, der dem übermittelten persönlichen Identifikationscodes (PIC) entspricht.

8. Verfahren gemäss Anspruch 7, wobei, falls der erste autorisierte Nutzer (U1) einen persönlichen Identifikationscode (PPIC) zur Verfügung stellt, welcher dem übermittelten persönlichen Identifikationscodes (PIC) entspricht, der Zugang nur erlaubt wird, sofern der erste autorisierte Nutzer (U1) den persönlichen Identifikationscode (PPIC) innerhalb eines vorbestimmten Zeitintervalls zur Verfügung stellt.

9. Verfahren gemäss einem der Ansprüche 7 und 8, wobei bereitstellen eines unverwechselbaren Informationscodes (PUIC) bedeutet die Chip-ID der Chipkarte zu lesen.

10. Verfahren gemäss einem der Annsprüche 7 bis 9, wobei, sofern die Reservationsanfrage des ersten autorisierten Nutzers (U1) für das Fahrzeug (201) keinen unverwechselbaren Informationscode (UIC) umfasst, überprüfen der gespeicherten Daten, und falls verfügbar, zuordnen des gespeicherten unverwechselbaren Informationscodes (UIC) des erste autorisierten Nutzers (U1) als unverwechselbaren Informationscode (UIC) des ersten autorisierten Nutzers (U1).

11. Verfahren gemäss einem der Ansprüche 7 bis 10, wobei der Schritt zum ausführen der Reservation für das Fahrzeug (201) und speichern von Information eines autorisierten Nutzers zumindest Daten umfasst über einen gewünschten Ort, Startdatum, Startzeit und persönlicher Code (PC).

12. Verfahren gemäss Anspruch 11, wobei Drittpersonen eine Reservation für das Fahrzeug (201) ausführen können durch bereitstellen von zumindest Daten über den gewünschten Ort, Stardatum, Startzeit und persönlicher Code (PC1).

13. Verfahren gemäss Anspruch 12, umfassend den weiteren Schritt Rechnungsinformationen dem Dritten zuzustellen, unter Verwendung des persönlichen Codes (PC1) als Referenz.

## Revendications

1. Système destiné à commander l'accès à un véhicule (201) comprenant :
- un module de commande d'accès associé à un véhicule (100) destiné à permettre l'accès au véhicule (201) par un premier ou un deuxième utilisateur autorisé à la suite de l'achèvement d'une séquence de vérifications, le module de commande d'accès associé à un véhicule (100) comprenant un dispositif de lecture (105) destiné à lire un code d'informations unique fourni (PUIC) ;
- un serveur (215, 212) comprenant un module de vérification (203) destiné à effectuer une réservation du véhicule (201) lors de la réception d'une demande pour réserver le véhicule (201) et comprenant un moyen de mémorisation (204, 213) destiné à mémoriser un code d'informations unique (UIC) et un code d'identification personnel (PIC) du premier et du deuxième utilisateurs autorisés ;
- un canal de communications (202) destiné à prendre en charge des communications entre le module de commande d'accès associé à un véhicule (100) et le serveur (215, 212),
- grâce à quoi le module de commande d'accès associé à un véhicule (100) comprend un moyen de mémorisation (109) destiné à mémoriser des informations représentatives de la réservation et comprend un module de décision (101) qui est conçu pour permettre l'accès au véhicule (201),
- le module de décision (101) est conçu pour une lecture par le dispositif de lecture (105) d'un code d'identification unique fourni (PUIC) :
- le module de décision (101) est conçu pour contrôler si un code d'identification unique (UIC) du premier utilisateur autorisé est mémorisé et le module de décision est **caractérisé en ce que** :
- soit il est conçu pour permettre l'accès au véhicule au premier utilisateur autorisé si le code d'identification unique fourni (PUIC) correspond au code d'identification unique (UIC) du premier utilisateur autorisé,
- soit il est conçu pour une lecture par un moyen d'entrée (105, 108) d'un code d'identification personnel fourni (PPIC) et pour permettre l'accès au véhicule si le code d'identification personnel fourni (PPIC) correspond au code d'identification personnel (PIC) du premier utilisateur autorisé, grâce à quoi le module de décision (101) est conçu pour transmettre le code d'identification unique fourni (PUIC) par le canal de communications (202) au serveur (215),
où le code d'identification unique fourni (PUIC) est mémorisé dans le moyen de mémorisation (204) sous forme d'un code d'identification unique (UIC) du premier utilisateur autorisé.

2. Système selon la revendication 1, dans lequel le dispositif de lecture (105) est un détecteur de carte à puce.

3. Système selon la revendication 2, dans lequel le dispositif de lecture (105) est capable de détecter l'identificateur ID de la puce.

4. Système selon l'une quelconque des revendications précédentes, dans lequel le module de décision (101) comprend un temporisateur et permet l'accès au véhicule (201) pour un utilisateur autorisé uniquement dans une tranche de temps prédéterminée.

5. Système selon l'une quelconque des revendications précédentes, dans lequel le module de vérification (203) est conçu pour surveiller si pour un utilisateur autorisé, un code d'informations unique respectif (UIC) est mémorisé et est conçu pour s'assurer que, s'il est disponible, le code d'informations unique (UIC) sera transmis au module de commande d'accès associé à un véhicule (100).

6. Système selon l'une quelconque des revendications précédentes, dans lequel le module de vérification (203) est programmé pour sélectionner, sur la base d'un code personnel (PC, PC1), le code d'informations unique correspondant (UIC), et est programmé de sorte que lors d'une communication avec un tiers, le code personnel (PC, PC1) soit utilisé.

7. Procédé de commande d'accès à un véhicule (201) par un premier ou un deuxième utilisateur autorisé comprenant les étapes consistant à :
- effectuer, au niveau d'un système de réservation (212, 215), une réservation du véhicule (201), lors de la réception d'une demande par le premier utilisateur autorisé pour réserver le véhicule (201), où le système de réservation (212, 215) mémorise des informations d'utilisateurs autorisés ;
- contrôler si les informations des utilisateurs autorisés comprennent un code d'identification unique (UIC) du premier utilisateur autorisé (U1), le procédé est **caractérisé en ce qu'**il comprend en outre les étapes consistant à
- lorsque le premier utilisateur autorisé (U1) tente d'accéder au véhicule (201) en fournissant un code d'identification unique (PUC),
- soit permettre un accès si le code d'identification unique fourni (PUIC) correspond au code d'identification unique (UIC) du premier utilisateur autorisé (U1),
- soit si les informations des utilisateurs autorisés ne comprennent pas un code d'identification unique (UIC) du premier utilisateur autorisé (U1), transmettre un code d'identification personnel (PIC) au premier utilisateur autorisé (U1), et
- recueillir les données du code d'identification unique fourni (PUIC) et mettre à jour les informations mémorisées du premier utilisateur autorisé (U1) dans le système de réservation (212, 215) par la mémorisation des données recueillies sous forme du code d'identification unique (UIC), et permettre l'accès si le premier utilisateur autorisé (U1) fournit un code d'identification personnel (PPIC) correspondant au code d'identification personnel transmis (PIC).

8. Procédé selon la revendication 7 dans lequel, si le premier utilisateur autorisé (U1) fournit un code d'identification personnel (PPIC) correspondant au code d'identification personnel transmis (PIC), l'accès est uniquement autorisé si le premier utilisateur autorisé (U1) fournit le code d'identification personnel (PPIC) dans une tranche de temps prédéterminée.

9. Procédé selon l'une quelconque des revendications 7 et 8, dans lequel la fourniture d'un code d'identification unique (PUIC) signifie la lecture de l'identificateur ID de puce d'une carte à puce.

10. Procédé selon l'une quelconque des revendications 7 à 9, dans lequel, si la demande par le premier utilisateur autorisé (U1) pour réserver le véhicule (201) ne comprend pas un code d'identification unique (UIC), les données mémorisées sont contrôlées, et si cela est possible, le code d'identification unique mémorisé (UIC) du premier utilisateur autorisé (U1) fait l'objet d'une affectation pour être le code d'identification unique (UIC) du premier utilisateur autorisé (U1).

11. Procédé selon l'une quelconque des revendications 7 à 10, dans lequel l'étape de réalisation d'une réservation du véhicule (201) et la mémorisation des informations d'un utilisateur autorisé comprend au moins des données concernant une position, une date de départ, une heure de départ et un code personnel (PC) souhaités.

12. Procédé selon la revendication 11, dans lequel des tiers peuvent effectuer une réservation du véhicule (201) en fournissant au moins des données concernant une position, une date de départ, une heure de départ et un code personnel (PC1) souhaités.

13. Procédé selon la revendication 12, comprenant l'étape supplémentaire d'envoi d'informations de facturation à un tiers en utilisant le code personnel (PC1) comme référence.
